# EUROPÄISCHE PATENTSCHRIFT

(11) **EP 4 426 169 B1**
(45) Veröffentlichungstag und Bekanntmachung des Hinweises auf die Patenterteilung: **17.09.2025**
(21) Anmeldenummer: 22801490.8
(22) Anmeldetag: 14.10.2022
(51) Int. Cl.: A47K 1/08, A44B 18/00, B60R 11/00, A47G 1/17, A47G 27/04

(54) **VERBINDUNGSSYSTEM**
CONNECTION SYSTEM
SYSTÈME DE CONNEXION

(30) Priorität: 04.11.2021 DE 102021005460
(43) Veröffentlichungstag der Anmeldung: 11.09.2024
(73) Patentinhaber: Gottlieb Binder GmbH & Co. KG, 71088 Holzgerlingen (DE)
(72) Erfinder: HEEPE, Lars, 72072 Tübingen (DE); TRAMSEN, Halvor, 71088 Holzgerlingen (DE); DROTLEF, Dirk-Michael, 75233 Tiefenbronn (DE)
(74) Vertreter: Kohler Schmid Möbus Patentanwälte
(86) Internationale Anmeldenummer: PCT/EP2022/078634
(87) Internationale Veröffentlichungsnummer: WO 2023/078656

(56) Entgegenhaltungen:
- WO-A1-2020/216802
- US-A1- 2019 040 283
- US-B2- 8 011 626

## Beschreibung

Die Erfindung betrifft ein Verbindungssystem unter Einsatz eines Haft- und eines Verschlussteils.

DE 10 2007 012 433 A1 betrifft ein Festlegesystem respektive Verbindungssystem, bestehend aus zumindest einem Haftverschlussteil, das sich mit seiner Festlegeseite an der freien Stirnseite eines Festlegeteiles festlegen lässt, dessen andere Wirkseite mit einer aktivierbaren Wirksubstanz versehen ist, die aktiviert eine Festlegeverbindung mit der Festlegeseite eines Drittbauteils eingeht. Die bekannte Systemlösung kommt insbesondere als Verlegesystem für Teppiche oder Teppichfliesen zum Einsatz mit einer die Nutzfläche bildenden Teppichseite und einem die Festlegeseite bildenden Teppichrücken. Dergestalt ist das Verlegen von Teppichen oder Fliesen in üblicher Weise lösungsmittelfrei in geschlossenen Räumen ermöglicht.

Durch DE 10 2004 015 321 A1 ist ein Verbindungssystem bekannt, zumindest bestehend aus einem Haftverschlussteil mit einem Trägerband mit auf diesem auf einer Seite angeordneten Verhakungselementen sowie mit mindestens einem Abdeckband, das mindestens einen freien Seitenrandbereich bildet, der sich über den zuordenbaren Längsrand des Trägerbandes hinaus erstreckt, wobei der jeweilige freie Seitenrandbereich des jeweiligen Abdeckbandes in Richtung auf das Trägerband längs einer in Längsrichtung verlaufenden Falzlinie über sich selbst derart umfaltbar ist, dass der Endrand des jeweiligen freien Seitenrandbereiches des Abdeckbandes dem zuordenbaren Längsrand des Trägerbandes zugekehrt ist. Als weiteren Bestandteil dieses Verbindungssystems ist auf der den Verhakungselementen abgewandten Seite des Haftverschlussteils ein Verbindungsmittel für einen Formschaum vorgesehen, das aus einer Vielzahl an vorstehenden Einzelstäbchen gebildet ist, die frei von zusätzlichen Vorsprüngen gehalten sich mit dem Formschaum verbinden. Dergestalt ist ein Verbindungssystem für Polsterschaumkörper geschaffen, das das Festlegen von Sitzbezügen an ihnen über einen Kletten^{®}-Haftverschluss ermöglicht.

Weitere Verbindungssysteme sind aus der WO 2020/216802 A1 und der US 2019/040283 A1 bekannt.

Die vorstehend beschriebenen Lösungen im Stand der Technik sind für eine reversible Befestigung von Funktionsbauteilen auf unebenen, welligen und/oder deformierbaren Oberflächen nicht gut geeignet.

Ausgehend von diesem Stand der Technik liegt daher der Erfindung die Aufgabe zugrunde, eine demgegenüber verbesserte Befestigungslösung zu schaffen, die auch langandauernd eine sichere Befestigung von Funktionsbauteilen an glatten Oberflächen, wie Glas, aber auch für rauhe und wellige Oberflächen ermöglicht. Eine dahingehende Aufgabe löst ein Verbindungssystem mit den Merkmalen des Patentanspruches 1 in seiner Gesamtheit.

Das erfindungsgemäße Verbindungssystem besteht zumindest aus
- einem Haftteil, das zumindest ein Trägerteil mit einer Vielzahl von einstückig mit ihm verbundenen stielartigen Haftelementen aufweist, deren Kopfteile an ihren freien Stirnseiten mittels Adhäsion an Drittbauteilen in wiederlösbarer Weise festlegbar sind
- einem Verschlussteil und
- einem weiteren Verschlussteil (24),
   , wobei das Verschlussteil (18) mit dem Haftteil auf einer Seite fest verbunden ist und auf einer anderen gegenüberliegenden Seite freiliegende Verschlusselemente aufweist, die mit weiteren, korrespondierend ausgebildeten Verschlusselementen des weiteren Verschlussteils in Eingriff gebracht einen wiederlösbaren Haftverschluss bilden.

So weist das Haftteil eine Vielzahl von stielartigen Haftelementen auf, die mit ihren verbreiterten Enden unter Bildung von Kopfteilen mittels Adhäsion an Drittbauteilen, wie beispielsweise Fensterglas, in wiederlösbarer Weise festlegbar sind. Als Adhäsionsmechanismus dienen dabei sogenannte Van-der-Waals-Kräfte, die auf relativ schwachen nicht-kovalenten Wechselwirkungen zwischen Atomen oder Molekülen beruhen; im Hinblick auf die Vielzahl von Haftelementen, vorzugsweise von mehr als 10000 Haftelementen pro cm2 Trägerfläche des Trägerteils kommt es dennoch zu einer verlässlichen Anhaftung des Haftteils als Ganzes mit den Drittbauteilen, wie glatten Oberflächen, beispielsweise in Form von Fensterglas. Das erfindungsgemäße Verbindungssystem kann als Folie konzipiert aufgrund seiner Biegeschlaffheit sich an so ziemlich jede Substratgeometrie anschmiegen, solange diese auf nanoskopischem Level glatt ist. Insofern ist das Verbindungssystem auch für rauhe und wellige Oberflächen geeignet, wie sie beispielsweise an Fliesen oder an anderen strukturierten Bauteilen vorhanden sind.

Als weitere wesentliche Komponente des Verbindungssystems dient ein fest mit dem Haftteil verbundenes Verschlussteil mit einer Vielzahl freiliegender Verschlusselemente, beispielsweise in Form eines Schlaufenmaterials. Das dahingehende Verschlussteil mit seinen Verschlusselementen bildet dabei eine Verschlusskomponente aus, die mit einer korrespondierenden Verschlusskomponente einen klassischen, immer wieder lösbaren Haftverschluss bildet, der auch unter der Bezeichnung "Klett-Haftverschluss" oder "Kletten^{®}-Haftverschluss" weithin bekannt ist. Die weitere Verschlusskomponente des dahingehend aufbauenden Haftverschlusses ist dann mit dem jeweiligen Funktionsbauteil verbunden und erlaubt das Anbringen dieses Funktionsbauteiles über die Haftverschlussverbindung und dem Haftteil an dem Drittbauteil, regelmäßig bestehend aus einer glatten Oberfläche, wie beispielsweise Glas. Während dabei bevorzugt das Haftteil an dem genannten Drittbauteil verbleibt, lässt sich das Funktionsbauteil über den wiederlösbaren Haftverschluss von demjenigen Verschlussteil respektive derjenigen Verschlusskomponente entfernen, die an dem Haftteil als Bestandteil des Verbindungssystems permanent verbleibt.

Dieser sequentielle Aufbau von Haftteil mit Verschlussteil im Rahmen des Verbindungssystems führt zu einer verbesserten Kontaktformation des zu realisierenden Haftverschlusses an einer Oberfläche des Drittbauteils mit sich daraus ergebenden verbesserten Haft- und Schereigenschaften für den Haftverschluss als Ganzes. Insbesondere führt dieser Aufbau zu einer verbesserten Anpassungsfähigkeit der Anhaftung an uneben verlaufende Oberflächen und kann insoweit vorhandene Unebenheiten sowohl am Drittbauteil als auch gegebenenfalls am Funktionsbauteil ausgleichen.

Aufgrund des Zwei-Komponenten-Aufbaus des Verbindungssystemes mit Haftteil und Verschlussteil als der einen Komponente besteht die Möglichkeit einer Kontaktflächenvergrößerung an der Oberfläche des Drittbauteils. So kann das Haftteil der einen Komponente eine größere Adhäsions- Haftfläche aufweisen als das weitere Verschlussteil, die Bestandteil der weiteren Verschlusskomponente des herzustellenden Haftverschlusses ist. Durch diese Kontaktvergrößerung an der anzubringenden Oberfläche des Drittbauteiles wird eine höhere Haft- und Scherkraft für das Gesamtverbindungssystem mit dem Haftverschluss erzielt, so dass das über den wiederlösbaren Haftverschluss anzubringende Funktionsbauteil eine entsprechend hohe Gewichtskraft aufweisen kann, das mit dem Verbindungssystem dennoch sicher festlegbar ist.

Die angesprochene Kontaktflächenvergrößerung in Verbindung mit dem Zwei-Komponenten-Aufbau bringt auch einen weiteren Vorteil hinsichtlich des Ablöseverhaltens mit sich. Unter sehr großer Last oder beim Öffnen des Zwei-Komponenten-Systems, ist ggfs. das Ausbilden einer sich radial ausbreitenden und gegenläufigen Peelfront erforderlich, die eine höhere Ablösekraft erfordert und dadurch die resultierende Adhäsions-Haftkraft deutlich erhöht. Im Weiteren wird durch die sich radial ausbreitende Peelfront der Peelwinkel im Vergleich zu bekannten Systemlösungen reduziert und dadurch die resultierende Adhäsion-Haftkraft weiter erhöht.

Das Verbindungssystem als Ganzes besitzt eine höhere Anpassungsfähigkeit im Vergleich zu einer Anhaft-Elastomerschicht nach dem Stand der Technik, da die Gesamtdicke des Verbindungssystems größer ist und somit in größerem Rahmen Unebenheiten im und außerhalb des Verbindungssystems besser ausgeglichen werden können. Selbst im direkten Vergleich zu einer gleichdicken Elastomerschicht oder einer Kombination einer solchen Elastomerschicht mit einer weich-elastischen Schicht, beispielsweise aus Schaumstoff, ist die Anpassungsfähigkeit und Haftung für das erfindungsgemäße Verbindungssystem verbessert, da das Zwei-Komponentensystem keine oder nur sehr stark reduzierte Rückstellkräfte bei elastischer Deformation aufweist. Des Weiteren wird durch das Verhaken des Verbindungssystems mit der weiteren Verschlusskomponente mit den korrespondierend ausgebildeten Verschlusselementen als Teil des wiederlösbaren Haftverschlusses im Vergleich zu einer reinen Elastomerschicht, das insoweit geschaffene Gesamtsystem ausgesteift, mit der Folge, dass die möglicherweise auftretenden Spannungen respektive Lasten auf eine größere Fläche verteilt werden können und dadurch zusätzlich die Haft- und Schereigenschaften verbessert sind.

Das erfindungsgemäße
Verbindungssystem ist dadurch gekennzeichnet, dass das Verbindungssystem ein Funktionsbauteil (28) aufweist und dass das weitere Verschlussteil auf seiner den weiteren Verschlusselementen gegenüberliegenden Seite mit einem
Verbindungsmittel, wie einem Klebstoff, an dem Funktionsbauteil festgelegt ist. Dergestalt ist ein sicheres Festlegen eines wie auch immer gearteten Funktionsbauteils, beispielweise in Form eines 5G-Empfängers im Rahmen einer WLAN-Verbindung, an Drittbauteilen, wie einer Fensterglasoberfläche in einem Gebäude erreicht und selbst, wenn sich solche relativ dünnen Fensterglasscheiben aufgrund von Witterungseinflüssen, wie Strahlungshitze oder dergleichen verformen, ist das Funktionsbauteil sicher an dem dahingehenden Fensterglas auch über sehr lange Einsatzdauern hinweg festgelegt.

Bei einer weiteren besonders bevorzugten Ausführungsform des erfindungsgemäßen Verbindungssystems kann vorgesehen sein, dass zwischen Haftteil und Verschlussteil mindestens eine Schicht eingebracht ist, von denen mindestens eine aus einem biegeschlaffen und inelastischen Material besteht, die vorzugsweise als weiteres Trägerteil ausgebildet Bestandteil des Haftteils ist. Dergestalt lassen sich etwaige Unebenheiten zwischen dem Drittbauteil, beispielsweise in Form der Gasfläche, und dem Verbindungssystem weiterhin ausgleichen und insbesondere bei Einsatz von biegeschlaffem und inelastischem Material wird eine homogenere Spannungs-/Lastverteilung für das Gesamtverbindungssystem erzielt, mit der Folge, dass die möglicherweise auftretenden Spannungen respektive Lasten auf eine größere Fläche verteilt werden können und dadurch zusätzlich die Haft- und Schereigenschaften verbessert sind. Es hat sich gezeigt, dass eine PET-Folie zwischen einem Verschlussmaterial mit kopfseitigen Adhäsionseigenschaften nach dem Gecko-Prinzip und Velours, die maximale Haftkraft des Systems durch Load-Sharing extrem erhöht. Diese ist zwar biegeschlaff und passt sich dadurch der anzuhaftenden Oberfläche aber sehr gut an. PET ist allerdings nicht elastisch, was wichtig für das Load-Sharing des Systems ist. Sowohl das Verbindungssystem selbst mit Haftteil und Verschlussteil sowie das weitere Verschlussteil des wiederlösbaren Haftverschlusses lassen sich mehrschichtig aufbauen, wobei die einzelnen Schichten Textilien, Netze, Folien, magnetisierbare Partikel, Elastomere, thermoplastische Elastomere, Metalle, Komposite, Polymere, Kleber, Thermoplaste oder Blends aus diesen Materialien, auch in Verbindung mit reinen Thermoplasten, aufweisen können. Diese einzelnen Schichten können auf unterschiedliche Weise miteinander verbunden werden, beispielsweise miteinander verklebt oder verschweißt sein. Insbesondere auf die Ober- und/oder Unterseite der angesprochenen beiden Komponenten können weitere unterschiedlich funktionelle Schichten aufgebracht sein und beispielsweise aus drucksensitiven Klebern, Kontakten, Magneten, integrierten Elektronikbauteilen oder Aufdrucken, etc. bestehen.

Insbesondere das Haftteil mit seinen Adhäsions-Haftelementen ist aus Elastomeren, thermoplastischen Elastomeren, Thermoplasten oder Blends aus diesen Materialien, auch in Verbindung mit reinen Thermoplasten gebildet, wobei besonders bevorzugt Polysiloxane, Polyurethane, Naturkautschuke, SBR, EPDM zum Einsatz kommen.

Bei einer weiteren bevorzugten Ausführungsform des erfindungsgemäßen Verbindungssystems ist vorgesehen, dass das Haftteil und das Verschlussteil aus transluzenten Kunststoffmaterialien bestehen, was die Möglichkeit eröffnet die entstehende Kontaktbildung optisch zu überprüfen. Wenn, beispielsweise das Haftteil des Verbindungssystems auf einer Glasscheibe aufgebracht ist und der Kontakt durch leichtes Darüberstreichen von Hand hergestellt wurde, lassen sich in Kontakt befindliche Bereiche optisch leicht von Bereichen unterscheiden, die nicht in Kontakt miteinander sind, was sich aus einem Kontrastunterschied im Rahmen der Beobachtung ergibt. Bei Feststellen dahingehender Kontrastunterschiede lässt sich dann die vollflächige Kontaktformation von Hand nachträglich noch herstellen und erneut optisch überprüfen.

Bei einer weiteren bevorzugten Ausführungsform des erfindungsgemäßen Verbindungssystems ist vorgesehen, dass die Haftelemente des Haftteils in Gruppen angeordnet zwischen sich Räume freilassen, die zu einer optisch erkennbaren Segmentierung führen. Bevorzugt ist dabei vorgesehen, dass auch die Verschlusselemente des einen Verschlussteils in Gruppen angeordnet zwischen sich Räume freilassen, die zu einer optisch erkennbaren Segmentierung führen. Die hieraus entstehenden einzelnen Segmente können in unterschiedlichem Abstand und Anordnung realisiert sein, so dass sich in weitgezogenem Rahmen Muster verschiedenster Art generieren lassen.

Dabei ist bevorzugt auch vorgesehen, dass die freigelassenen Räume zwischen den Gruppen von Haftelementen und/oder Verschlusselementen der Aufnahme von Funktionskomponenten dienen, wie beispielsweise Elektronikbauteilen, Magneten, Aufdrucken, etc. Dergestalt lässt sich das Verbindungssystem auch mit informationstragenden Medien für Anwendungen aller Art ausstatten.

Im Rahmen vielfältiger Einsatzmöglichkeiten für das Verbindungssystem ist ferner bevorzugt vorgesehen, dass die Verschlusselemente der Verschlussteile wahlweise aus Haken, Doppelhaken, Pilzen, Schlaufen, Stielen, Multifilamenten, Beflockungsfasern, etc. bestehen, wobei die Verschlussteile, vorzugsweise immer derart gewählt sind, dass diese in Verbindung miteinander einen Haftverschluss ausbilden. Dabei können auch hermaphroditische Verbindungssysteme realisiert werden, bei denen, beispielsweise Pilz auf Pilz, den jeweils wiederlösbaren Haftverschluss ausbilden.

Im Folgenden wird das erfindungsgemäße Verbindungssystem anhand von Ausführungsbeispielen nach der Zeichnung näher erläutert. Dabei zeigen in prinzipieller und nicht maßstäblicher Darstellung die
- Fig. 1: ein erfindungsgemäßes Verbindungssystem, bestehend aus einem Haftteil und einem Verschlussteil, das mit einem weiteren Verschlussteil einen wiederlösbaren Haftverschluss bildet, wobei das Verbindungssystem an einem Drittbauteil, wie einer Glasoberfläche, festgelegt ist und das weitere Verschlussteil an einem Funktionsbauteil angebracht ist, das an dem Drittbauteil über das Verbindungssystem festgelegt werden soll;
- Fig. 2: das Verbindungssystem nach der Fig. 1 mit einer zusätzlich eingebrachten Schicht, insbesondere aus einem biegeschlaffen und inelastischen Material bestehend;
- Fig. 3 bis 5: eine der Fig. 2 entsprechende Darstellung verschiedener Ausführungsformen des Verbindungssystems;
- Fig. 6: in Draufsicht verschiedene Strukturen für ein segmentiert ausgebildetes Verbindungssystem gemäß den Darstellungen nach den Fig. 1 bis 7; und
- Fig. 7: in schematisiert stark vereinfachter Ansicht verschiedene Verschlusselemente, die für die korrespondierenden Verschluss teile zum Herstellen eines Haftverschlusses Verwendung fin den können.

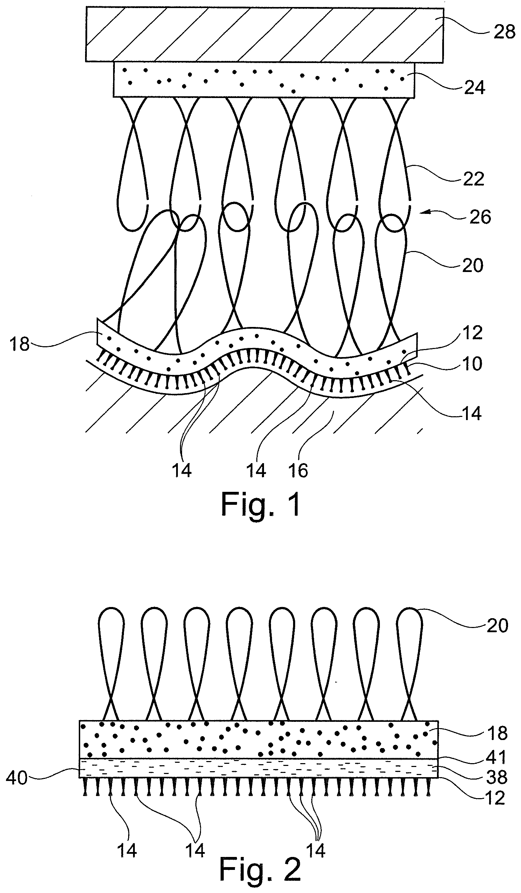

In der Fig. 1 sind die wesentlichen Komponenten des Verbindungssystems in einer Betriebs- oder Funktionsstellung gezeigt. Das Verbindungssystem weist ein Haftteil 10 auf, das zumindest aus einem flächenförmigen Trägerteil 12 mit einer Vielzahl von einstückig mit ihm verbundenen stielartigen Haftelementen 14 besteht, deren Kopfteile an ihren freien Stirnseiten mittels Adhäsion an Drittbauteilen 16 in wiederlösbarer Weise festlegbar sind. Aus DE 10 2004 012 067 A1 ist ein Verfahren zum Herstellen von solchen Haftteilen 10 bekannt, die man fachsprachlich auch als Chill-Roll-Verfahren bezeichnet. Gemäß der Darstellung nach der Fig. 1 ist das Haftteil 10 in unmittelbar anhaftender Berührung mit der Oberfläche des Drittbauteiles 16, sobald die kopfseitigen Enden in Form der Kopfteile in Berührung mit dieser Oberfläche gelangen.

Auf der Rückseite des genannten Haftteiles 10 ist ein Verschlussteil 18 vorhanden, das mit dem Haftteil 10 entlang einer benachbarten Seite fest verbunden ist und auf der anderen, gegenüberliegenden Seite sind freiliegende Verschlusselemente 20 vorhanden, die mit weiteren korrespondierend ausgebildeten hakenförmigen Verschlusselementen 22 eines weiteren Verschlussteils 24 in Eingriff gebracht einen wiederlösbaren Haftverschluss 26 bilden. Das weitere Verschlussteil 24 ist mit seiner Rückseite fest mit einem Funktionsbauteil 28 verbunden, das in Fig. 1 wie das Drittbauteil 16 nur ausschnittsweise dargestellt ist; bei hergestellter Verbindung des Haftverschlusses 26 gemäß der Darstellung nach der Fig. 1 aber an dem Drittbauteil 26 über das Haftteil 10 festgelegt ist.

Ein Verschlussteil 18 mit schlaufenförmigen Verschlusselementen 20 ist beispielhaft in DE 102 40 986 B3 aufgezeigt. Dabei besteht ein Grundgewebe des Verschlussteils 18 aus Kett- und Schussfäden und des Weiteren ist mindestens ein Funktionsfaden als sogenannter Polfaden in das Grundgewebe teilweise mit eingewebt, der über das Grundgewebe vorstehend einzelne Schlaufen als Verschlusselemente 20 ausbildet. Schneidet man die derart gebildeten schlaufenförmigen Polfäden an ihrem kopfseitigen Ende seitlich auf, entstehen einzelne Verschlusshaken, die zusammen das hakenartige Verschlusselement 22 für das weitere Verschlussteil 24 ausbilden. Die Verhakung von Verschlussteil 18 mit dem weiteren Verschlussteil 24 im Rahmen des Haftverschlusses 26 muss nicht vollflächig erfolgen um hohe Haft- und Scherfestigkeiten zu erzielen; es kann unter Umständen sogar von Vorteil sein, wenn das Verschlussteil 18 des Verbindungssystems vollflächig auf stark gekrümmten Flächen oder über Kanten einer Oberfläche hinausgehend haftet und somit die Gesamtkontaktfläche für das Verbindungssystem erhöht ist und dergestalt zusätzlich der Ablösewinkel positiv verändert wird. Entgegen der gewellten Darstellung nach der Fig. 1 kann die Oberfläche des Drittbauteiles 16 auch parallel zur Oberfläche des Funktionsteils 28 verlaufen. Des Weiteren besteht auch die Möglichkeit die Oberfläche des Funktionsbauteiles 28 oder das Funktionsbauteil 28 selbst zu krümmen, beispielsweise mit einer konvexen Krümmung zu versehen, der dann das weitere Verschlussteil 24 entsprechend nachfolgt. Eine Haftung auf Oberflächen bleibt auch bestehen, wenn sich im Laufe der Zeit die Oberfläche respektive das Drittbauteil 16 weiter verformen sollte. Da die Verhakung über den Haftverschluss 26 reversibel und rekonfigurierbar ist, kann es sich eventuell lokal durch externe Verformungen lösen, aber auch wieder "selbstheilend" schließen und der Verformung entsprechend folgen. Insoweit funktioniert das System bei teil- und vollflächiger Anlage.

Über eine Versteifung des Gesamtsystems hinaus durch die Kombination zweier Komponenten, wird das Gesamtsystem durch das feste Verhaken der beiden Komponenten miteinander zusätzlich versteift. Hierbei ist die eine Komponente gebildet durch das Drittbauteil 16 mit dem beschriebenen Verbindungssystem einschließlich dem Haftteil 10 und dem Verschlussteil 18 und die andere zweite Komponente ist gebildet durch das Funktionsbauteil 28 in Zusammenwirken mit dem weiteren Verschlussteil 24. Durch das zusätzliche Versteifen des Gesamtsystems werden etwaig auftretende Spannungen an den Grenzflächen homogener über eine größere Fläche verteilt und insoweit die Haft- und Schereigenschaften zusätzlich verbessert, was ein Versagen der angestrebten Verbindungen im Rahmen der Adhäsionsanhaftung für das Haftteil 10 und im Rahmen der Klettwirkung des hergestellten Haftverschlusses 26 verhindert.

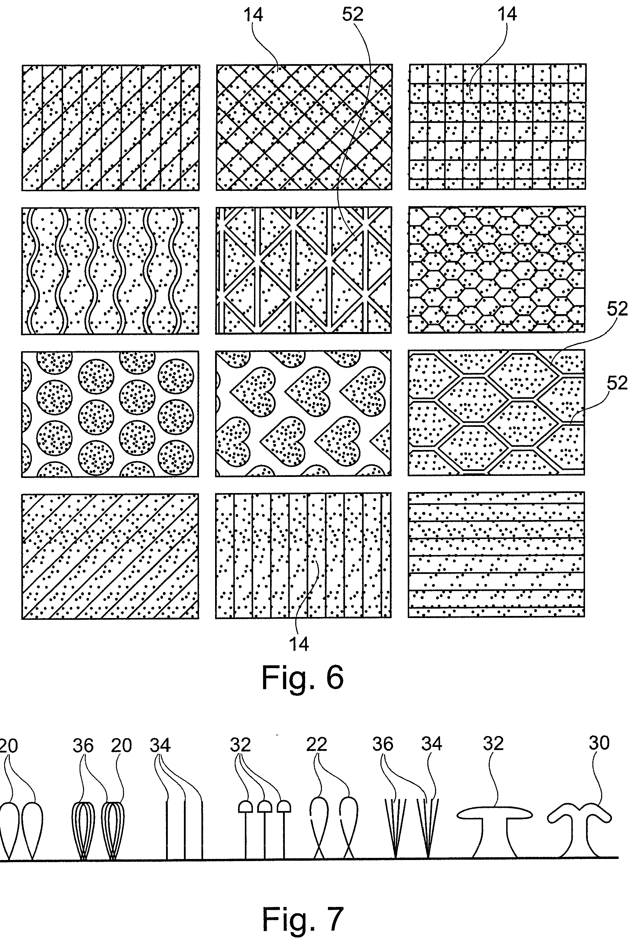

Die Kletthaftsysteme mit den schlaufenförmigen oder hakenartigen Verschlusselementen 20, 22 können wie vorstehend beschrieben sowohl Webals auch Maschenware mit den genannten Polelementen sein. Ferner ist hier der Einsatz von Vliesstoffen möglich sowie von Folienmaterialien als Grundsubstrat, das mit Beflockungsfasern als den Verschlusselementen verssehen ist. Des Weiteren ist auch eine einstückig gefertigte dreidimensionale Folie als Trägermaterial für Verschlusselemente möglich. Gemäß der Darstellung nach der Fig. 7 können die Polelemente verschiedene Formen einnehmen, beispielsweise in Form von Schlaufen 20 oder aus Haken 22 bestehen. Ferner können die Verschlusselemente aus Doppelhaken 30 gebildet sein oder aus Pilzköpfen 32 bestehen. Ferner können in begrenztem Umfang auch einzelne Stiele 34 zu einer wirksamen Verhaftung mit beitragen. Multifilamente 36 in Form von Mehrfachgarnsystemen können gemäß der Darstellung nach der Fig. 7 wiederum Schlaufen 20 ausbilden oder Stiele 34. Als eingesetzte Garn- und Verschlussmaterialien können Kunststoffmaterialien aller Art dienen, auch in Form von Nylon oder Polypropylen-Material.

Das Haftteil 10 besteht aus Materialien, beispielsweise aus Elastomeren, thermoplastischen Elastomeren, Thermoplasten oder Blends aus diesen Materialien, auch mit reinen Thermoplasten. Besonders bevorzugt ist dabei der Einsatz von Materialien wie Polysiloxane, Polyurethane, Naturkautschuke, SBR, EPDM. Für die Verbindung des Haftteiles 10 mit dem Trägerteil 12 des Verschlussteils 18 kann ein üblich hierfür geeigneter Klebstoff dienen, beispielsweise ein Klebstoff auf der Basis von Silikon. Mit einem dahingehenden Klebstoff kann auch die Rückseite des weiteren Verschlussteiles 24 mit der gegenüberliegenden freien Stirnseite des Funktionsbauteils 28 fest verbunden werden.

Wie die Darstellung nach der Fig. 2 zeigt, kann zwischen Trägerteil 12 und dem Verschlussteil 18 mindestens eine weitere Schicht 38 eingebracht sein. Eine solche Schicht 38 und vergleichbare Schichten können aus Textilien, Netzen, Folien, Elastomeren, thermoplastischen Elastomeren, Klebstoffen, Thermoplasten oder Blends aus diesen Materialien, auch mit reinen Thermoplasten bestehen, wobei bevorzugt PET, PE, HDPE, LDPE, PP, PVC, EPS, PUR zum Einsatz kommen. Die jeweilige Schicht 38 kann mit benachbarten Schichten (nicht dargestellt) sowie mit dem Trägerteil 12 und dem Verschlussteil 18 in üblicher Weise verklebt oder verschweißt sein. Sofern die Schicht 38 gemäß der Darstellung nach der Fig. 2 aus einem biegeschlaffen, inelastischen Material besteht, ist dergestalt für das Haftteil 10 ein weiteres biegeschlaffes, inelastisches Trägerteil 40 ausgebildet. Insbesondere wenn die biegeschlaffe, inelastische Schicht 38 aus einer PET-Folie gebildet ist, ergibt sich eine verbesserte Spannungs-/Lastverteilung und Haftung für das Gesamt-Verbindungssystem und das Haftteil 10 mit seinen inelastischen Trägerteilen 12, 40 und den Haftelementen 14 bildet dann insgesamt eine inelastische respektive biegeschlaffe Komponente aus, die sich in besonders vorteilhafter Weise an die Oberfläche des Drittbauteils 16 anschmiegt und sich dort mittels Adhäsion anhaftend festlegen lässt. Die Haftelemente 14 bilden eine Mikrostruktur aus, die kopfseitig, vergleichbar den Elementen eines Gecko-Fußes, mittels Adhäsion an Drittbauteilen verhaften und die unmittelbar aus einer Silikonfolie hervorgehen. Auf der anderen Seite ist ein FlauschNelours 18 vorhanden, der mit einem Grund nebst Kleber versehen ist. Zwischen den Lagen 38 und 18 ist eine zusätzliche Folie 41 angeordnet, die nicht elastisch und biegeschlaff ist, beispielsweise in Form einer PET-Folie.

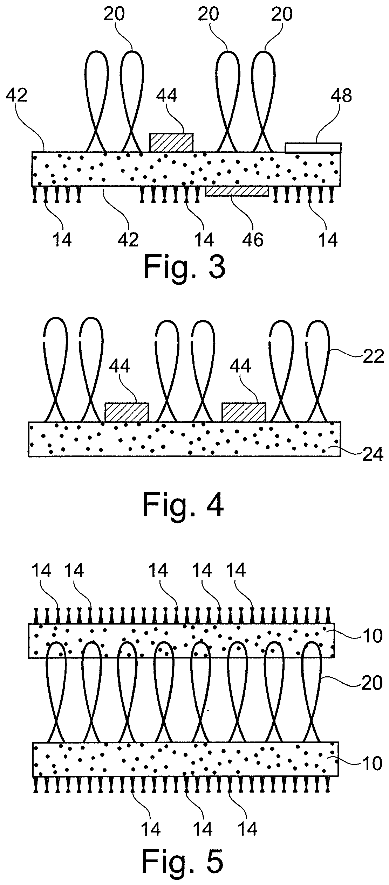

Wie sich weiter aus der Darstellung nach der Fig. 3 ergibt, können sowohl die Haftelemente 14 als auch die schlaufenförmigen Verschlusselemente 20 in Gruppen angeordnet zwischen sich Räume 42 freilassen, die zu einer optisch erkennbaren Segmentierung führen, was in Fig. 7 verdeutlicht wird, die in Draufsicht unterschiedliche Beispiele für eine Segmentierung zeigt, sowohl in Draufsicht auf die Haftelemente 14 als auch alternativ in Draufsicht auf die gegenüberliegende Seite gesehen, die Einzelschlaufen 20 für das dahingehende Verschlussteil 18. Dergestalt ist in weitgezogenem Rahmen etwaigen Designanforderungen des Marktes Genüge getan.

Die in Fig. 3 dargestellten freigelassenen Räume 42 zwischen den Gruppen von Haftelementen 14 können der Aufnahme von Funktionskomponenten dienen, wie Elektronikbauteilen 44, beispielsweise in Form von Computerchips. Eine weitere Möglichkeit besteht in der Aufnahme von Magneten 46, die die Anbindung eines weiteren Verschlussteiles verbessern können, das beispielsweise in seinem Trägerbauteil ferromagnetische Bestandteile aufweist. Eine weitere nicht abschließende Möglichkeit besteht darin, einen solchen freigelassenen Raum 42 für das Anbringen von Aufdrucken 48 vorzusehen, die neben üblichen Designaspekten auch die Wiedererkennbarkeit des Produktes sicherstellen können.

Gemäß der Darstellung nach der Fig. 4 kann auch zwischen die hakenartigen Verschlusselemente 22 des weiteren Verschlussteils 24, die in Gruppen angeordnet Räume 42 zwischen sich freilassen die vorstehend beschriebenen Funktionskomponenten verwendet werden.

Bei der Lösung nach der Fig. 5 ist quasi spiegelverkehrt der in Blickrichtung auf die Fig. 5 gesehen untere Aufbau mit dem Haftteil 10 darüberliegend entlang der Oberseite der schlaufenförmigen Verschlusselemente 20 in die dahingehenden Enden der Schlaufen mit eingebracht. Dergestalt ist das Hafteil 10 als Ganzes redundant ausgebildet und erlaubt nunmehr über die oberen Haftelemente 14, die Möglichkeit des Eingehens von weiteren Verbindungen, sei es mit Funktionskomponenten einschließlich zugehörigen Oberflächen, sei es in Form von Trägern mit korrespondierend ausgebildeten Verschlusselementen (nicht dargestellt), die mit den obigen vorstehenden Haftelementen 14 unter Bildung eines Haftverschlusses zusammenwirken können.

## Patentansprüche

1. Verbindungssystem, zumindest bestehend aus
- einem Haftteil (10), das zumindest ein Trägerteil (12) mit einer Vielzahl von einstückig mit ihm verbundenen stielartigen Haftelementen (14) aufweist, deren Kopfteile an ihren freien Stirnseiten mittels Adhäsion an Drittbauteilen (16) in wiederlösbarer Weise festlegbar sind,
- einem Verschlussteil (18), und
- einem weiteren Verschlussteil (24),
wobei das Verschlussteil (18) mit dem Haftteil (10) auf einer Seite fest verbunden ist und auf einer anderen gegenüberliegenden Seite freiliegende Verschlusselemente (20) aufweist, die mit weiteren korrespondierend ausgebildeten Verschlusselementen (22) des weiteren Verschlussteils (24) in Eingriff gebracht einen wiederlösbaren Haftverschluss (26) bilden, **dadurch gekennzeichnet,**
**dass** das Verbindungssystem ein Funktionsbauteil (28) aufweist, und dass das weitere Verschlussteil (24) auf seiner den weiteren Verschlusselementen (20) gegenüberliegenden Seite mit einem Verbindungsmittel, wie einem Klebstoff, an dem Funktionsbauteil (28) festgelegt ist.

2. Verbindungssystem nach Anspruch 1, **dadurch gekennzeichnet, dass** zwischen Haftteil (10) und Verschlussteil (18) mindestens eine Schicht (38) eingebracht ist, von denen mindestens eine aus einem biegeschlaffen inelastischen Material besteht, die vorzugsweise als weiteres Trägerteil (40) ausgebildet Bestandteil des Haftteils (10) ist.

3. Verbindungssystem nach einem der vorstehenden Ansprüche,
**dadurch gekennzeichnet, dass** das Haftteil (10) mit seinen Komponenten, insbesondere zum Anhaften an gekrümmt verlaufenden Oberflächen des zugeordneten Drittbauteils (16) als biegeschlaffes Bauteil konzipiert ist.

4. Verbindungssystem nach einem der vorstehenden Ansprüche, **dadurch gekennzeichnet, dass** das Haftteil (10) und das Verschlussteil (18) aus transluzenten Kunststoffmaterialien bestehen.

5. Verbindungssystem nach einem der vorstehenden Ansprüche, **dadurch gekennzeichnet, dass** die Haftelemente (14) des Haftteils (10) in Gruppen angeordnet zwischen sich Räume (42) freilassen, die zu einer optisch erkennbaren Segmentierung führen.

6. Verbindungssystem nach einem der vorstehenden Ansprüche, **dadurch gekennzeichnet, dass** die freigelassenen Räume (42) zwischen den Gruppen von Haftelementen (14) der Aufnahme von Funktionskomponenten dienen, wie Elektronikbauteilen (44), Magneten (46), Aufdrucken (48).

7. Verbindungssystem nach einem der vorstehenden Ansprüche, **dadurch gekennzeichnet, dass** die Verschlusselemente (20, 22) mindestens eines Verschlussteils (18, 24) in Gruppen angeordnet zwischen sich Räume (42) freilassen, die zu einer optisch erkennbaren Segmentierung führen.

8. Verbindungssystem nach einem der vorstehenden Ansprüche,
**dadurch gekennzeichnet, dass** die freigelassenen Räume (42) zwischen den Gruppen von Verschlusselementen (20, 22) der Aufnahme von Funktionskomponenten dienen, wie Elektronikbauteilen (44), Magneten (46), Aufdrucken (48).

9. Verbindungssystem nach einer der vorstehenden Ansprüche,
**dadurch gekennzeichnet, dass** die Verschlusselemente der Verschlussteile wahlweise aus Haken (22), Doppelhaken (30), Pilzen (32), Schlaufen (20), Stielen (34), Multifilamenten (36), Beflockungsfasern bestehen.

## Claims

1. Connection system, consisting at least of
- an adhesive part (10) comprising at least one carrier part (12) with a plurality of stem-like adhesive elements (14) integrally connected thereto, the head parts of which can be fixed at their free end faces in a releasable manner to third components (16) by means of adhesion,
- a closure part (18), and
- a further closure part (24),
wherein the closure part (18) is fixedly connected to the adhesive part (10) on one side and has exposed closure elements (20) on another opposite side, which, when brought into engagement with further correspondingly designed closure elements (22) of the further closure part (24), form a releasable adhesive closure (26), **characterized in that**
the connection system has a functional component (28), and that the further closure part (24) is fixed on its side opposite the further closure elements (20) to the functional component (28) using a connecting means such as an adhesive.

2. Connection system according to claim 1, **characterized in that** at least one layer (38) is inserted between the adhesive part (10) and the closure part (18), at least one of the layers consisting of an inelastic material with low bending stiffness, which, preferably being designed as a further carrier part (40), is part of the adhesive part (10).

3. Connection system according to one of the preceding claims, **characterized in that** the adhesive part (10) with its components is designed as a component with low bending stiffness, in particular for adhering to curved surfaces of the associated third component (16).

4. Connection system according to one of the preceding claims, **characterized in that** the adhesive part (10) and the closure part (18) consist of translucent plastic materials.

5. Connection system according to one of the preceding claims, **characterized in that** the adhesive elements (14) of the adhesive part (10) are arranged in groups leaving spaces (42) between them, which result in a visually recognizable segmentation.

6. Connection system according to one of the preceding claims, **characterized in that** the spaces (42) left free between the groups of adhesive elements (14) serve to accommodate functional components such as electronic components (44), magnets (46), and imprints (48).

7. Connection system according to one of the preceding claims, **characterized in that** the closure elements (20, 22) of at least one closure part (18, 24) are arranged in groups leaving spaces (42) between them, which result in a visually recognizable segmentation.

8. Connection system according to one of the preceding claims, **characterized in that** the spaces (42) left free between the groups of closure elements (20, 22) serve to accommodate functional components such as electronic components (44), magnets (46), and imprints (48).

9. Connection system according to one of the preceding claims, **characterized in that** the closure elements of the closure parts are optionally made of hooks (22), double hooks (30), mushrooms (32), loops (20), stems (34), multifilaments (36), or flocking fibers.

## Revendications

1. Système de liaison, constitué au moins de
- une partie adhésive (10) qui présente au moins une partie de support (12) comprenant une pluralité d'éléments adhésifs (14) en forme de bâtonnet reliés d'un seul tenant à ladite partie de support et dont les parties de tête peuvent être fixées par adhésion de manière amovible à des composants tiers (16) au niveau de leurs faces frontales libres,
- une partie de fermeture (18), et
- une partie de fermeture (24) supplémentaire,
la partie de fermeture (18) étant reliée de manière fixe à la partie adhésive (10) sur un côté et présentant des éléments de fermeture (20) à découvert sur un autre côté opposé, lesdits éléments de fermeture formant une fermeture adhésive (26) amovible en étant mis en prise avec des éléments de fermeture (22), réalisés de manière correspondante, de la partie de fermeture (24) supplémentaire,
**caractérisé en ce que**
le système de liaison présente un élément fonctionnel (28) et **en ce que** l'élément de fermeture (24) supplémentaire est fixé à l'élément fonctionnel (28) sur son côté opposé aux éléments de fermeture (20) supplémentaires avec un moyen de liaison, tel qu'une colle.

2. Système de liaison selon la revendication 1, **caractérisé en ce qu'**au moins une couche (38) est mise en place entre la partie adhésive (10) et la partie de fermeture (18), au moins ladite couche ou lesdites couches étant constituée(s) d'un matériau inélastique mou, qui fait de manière préférée partie intégrante de la partie adhésive (10) sous la forme d'une partie de support (40) supplémentaire.

3. Système de liaison selon l'une quelconque des revendications précédentes, **caractérisé en ce que** la partie adhésive (10) avec ses composants est conçue comme un composant mou, en particulier afin d'adhérer à des surfaces s'étendant de manière courbe du composant tiers (16) associé.

4. Système de liaison selon l'une quelconque des revendications précédentes, **caractérisé en ce que** la partie adhésive (10) et la partie de fermeture (18) sont constituées de matériaux plastiques translucides.

5. Système de liaison selon l'une quelconque des revendications précédentes, **caractérisé en ce que** les éléments adhésifs (14), agencés en groupes, de la partie adhésive (10) laissent libre entre eux des espaces (42) qui créent une segmentation visuellement reconnaissable.

6. Système de liaison selon l'une quelconque des revendications précédentes, **caractérisé en ce que** les espaces (42) laissés libres entre les groupes d'éléments adhésifs (14) servent à accueillir des composants fonctionnels, tels que des composants électroniques (44), des aimants (46), des impressions (48).

7. Système de liaison selon l'une quelconque des revendications précédentes, **caractérisé en ce que** les éléments de fermeture (20, 22), agencés en groupes, d'au moins une partie de fermeture (18, 24) laissent libre entre eux des espaces (42) qui créent une segmentation visuellement reconnaissable.

8. Système de liaison selon l'une quelconque des revendications précédentes, **caractérisé en ce que** les espaces (42) laissés libres entre les groupes d'éléments de fermeture (22) servent à accueillir des composants fonctionnels, tels que des composants électroniques (44), des aimants (46), des impressions (48).

9. Système de liaison selon l'une quelconque des revendications précédentes, **caractérisé en ce que** les éléments de fermeture des parties de fermeture sont constitués au choix de crochets (22), de crochets doubles (30), de champignons (32), de boucles (20), de bâtonnets (34), de multifilaments (36), de fibres de flocage.
